# EUROPEAN PATENT APPLICATION

(11) **EP 1 517 322 A2**
(43) Date of publication of application: **23.03.2005**
(21) Application number: 04021185.6
(22) Date of filing: 07.09.2004
(51) Int. Cl.: G11B 19/02

(54) **Source selection apparatus, information output apparatus, source allocation method**

(30) Priority: 19.09.2003 JP 2003328033
(71) Applicant: Pioneer Corporation, Tokyo-to (JP)
(72) Inventor: Yabe, Kazuo, Pioneer Corp, Kawagoe-shi Saitama-ken (JP)
(74) Representative: Tappe, Hartmut

(57) **Abstract**

A source selection apparatus (1) comprises: a first source selection device (11b) which selects one source out of one or more sources belonging to a first source group; a second source selection device (11b) which selects one source out of one or more sources belonging to a second source group; a determination device (11b) which determines a kind of contents recorded on an information recording medium; and an allocation device (11b) which, based on the kind of the contents, allocates the kind of the contents to either the first source selection device (11b) or the second source selection device (11b) as the source to be thereby selectable.

## Description

### BACKGROUND OF THE INVENTION

### 1. Field of the Invention

The present invention relates to a technical field of a source selection apparatus, a source selection method and so on for selecting one source out of a plurality of sources.

### 2. Related Art

So far, there have been known information reproducing (output) apparatuses for selecting one source from a plurality of sources, such as an AM (Amplitude Modulation) broadcast, an FM (Frequency Modulation) broadcast, a TV (television) broadcast, a videotape, a CD (Compact Disc) and an MD (Mini Disc) for instance, by a user's operation so as to reproduce or output information.

Furthermore, in recent years, the information reproducing apparatus such as a multi-disk player is becoming popular, which selects one source to reproduce information out of various kinds of sources including optical disks such as a CD-DA (Digital Audio), a CD-ROM, a Video-CD, a CD-G (Graphics), a DVD (Digital Versatile Disc)-Video, a DVD-Audio and DVD-ROM, and also the optical disks (CD-R and so on) compressively recorded by an MP3 (MPEG-1 Audio Layer 3) method and card-type recording media (Memory Stick (trademark) and so on).

As for the kinds of sources, there are music sources and video (image) sources if roughly divided. For instance, it can be said that an AM broadcast, an FM broadcast, the CD-DA, an MD, the MP3 and so on belong to the music sources and a TV broadcast, a videotape, the Video-CD, a CD-G (Graphics), DVD-Video and DVD-Audio belong to the video (image) sources (there are also the sources belonging to both the music sources and video sources).

Japanese Patent Application Laid-Open Publication No. Hei. 7-272464 discloses an audio/video combined device capable of selecting the music source and the video source individually out of such a large number of sources to enjoy voice and video of separate sources.

There is a device, as a device for selecting one source out of a large number of sources, whereby a user operates (turns) a source selection key (a dial key such as a rotary key or a push-button key) provided to an information reproducing apparatus for instance to sequentially switch the sources and select a desired source.

As for such a device in the past, however, there is an inconvenience that, as selectable sources increase, it takes a longer time for the user to select the desired source. In the case of an information reproducing apparatus such as a multi-disk player mounted on a vehicle for instance, there is also the inconvenience that the desired source is selected by going through an unnecessary video source although it is difficult (or prohibited by an automatic prohibition function) to see the video source.

### SUMMARY OF THE INVENTION

Thus, the present invention has been implemented by considering the inconveniences as examples of problems, and an object thereof is to provide a source selection apparatus, an information output apparatus, a source allocation method and so on capable of promptly selecting the source desired by the user.

The present invention will be described below. Although reference numerals in the accompanying drawings will be accessorily written as parenthetic numerals for descriptive convenience, the present invention is not limited to the illustrated features.

The above obj ect of the present invention can be achieved by a source selection apparatus (1) provided with: a first source selection device (11b) which selects one source out of one or more sources belonging to a first source group; a second source selection device (11b) which selects one source out of one or more sources belonging to a second source group; a determination device (11b) which determines a kind of contents recorded on an information recording medium; and an allocation device (11b) which, based on the kind of the contents, allocates the kind of the contents to either the first source selection device (11b) or the second source selection device (11b) as the source to be thereby selectable.

The above obj ect of the present invention can be achieved by a source selection apparatus (1) provided with: a first source selection device (11b) which selects one source out of one or more sources belonging to a first source group; a second source selection device (11b) which selects one source out of one or more sources belonging to a second source group; a determination device (11b) which determines a kind of contents recorded on an information recording medium; and an allocation device (11b) which, based on the kindofthe contents, allocates the kind of the information recording medium to either the first source selection device (11b) or the second source selection device (11b) as the source to be thereby selectable.

The above obj ect of the present invention can be achieved by a source selection apparatus (1) provided with: a first source selection device (11b) which selects one source out of one or more sources belonging to a first source group; a second source selection device (11b) which selects one source out of one or more sources belonging to a second source group; a determination device (11b) which determines a kind of an information recording medium; and an allocation device (11b) which, based on the kind of the information recording medium, allocates the kind of the information recording medium to either the first source selection device (11b) or the second source selection device (11b) as the source to be thereby selectable.

The above obj ect of the present invention can be achieved by a source selection apparatus (1) provided with: a first source selection device (11b) which selects one source out of one or more sources belonging to a first source group; a second source selection device (11b) which selects one source out of one or more sources belonging to a second source group; a determination device (11b) which determines a kind of an information recording medium; and an allocation device (11b) which, based on the kind of the information recording medium, allocates the kind of the contents recorded on the information recording medium to either the first source selection device (11b) or the second source selection device (11b) as the source to be thereby selectable.

The above obj ect of the present invention can be achieved by an information output apparatus (1) provided with: the above-mentioned source selection apparatus (1) and a control apparatus which exerts control to have information outputted from a source selected by the source selection apparatus (1).

The above object of the present invention can be achieved by a source allocation method of a source selection apparatus (1) comprising a first source selection device (11b) which selects one source out of one or more sources belonging to a first source group and a second source selection device (11b) which selects one source out of one or more sources belonging to a second source group, the source allocation method provided with: a process which determines a kind of contents recorded on an information recording medium; and a process which, based on the kind of the contents, allocates the kind of the contents to either the first source selection device (11b) or the second source selection device (11b) as the source to be thereby selectable.

The above obj ect of the present invention can be achieved by a source allocation method of a source selection apparatus (1) comprising a first source selection device (11b) which selects one source out of one or more sources belonging to a first source group and a second source selection device (11b) which selects one source out of one or more sources belonging to a second source group, the source allocation method provided with: a process which determines a kind of contents recorded on an information recording medium; and a process which, based on the kind of the contents, allocates the kind of the information recording medium to either the first source selection device (11b) or the second source selection device (11b) as the source to be thereby selectable.

The above obj ect of the present invention can be achieved by a source allocation method of a source selection apparatus (1) comprising a first source selection device (11b) which selects one source out of one or more sources belonging to a first source group and a second source selection device (11b) which selects one source out of one or more sources belonging to a second source group, the source allocation method provided with: a process which determines a kind of an information recording medium; and a process which, based on the kind of the information recording medium, allocates the kind of the information recording medium to either the first source selection device (11b) or the second source selection device (11b) as the source to be thereby selectable.

The above obj ect of the present invention can be achieved by a source allocation method of a source selection apparatus (1) comprising a first source selection device (11b) which selects one source out of one or more sources belonging to a first source group and a second source selection device (11b) which selects one source out of one or more sources belonging to a second source group, the source allocation method provided with: a process which determines a kind of an information recording medium; and a process which, based on the kind of the information recording medium, allocates the kind of the contents recorded on the information recordingmediumto either the first source selection device (11b) or the second source selection device (11b) as the source to be thereby selectable.

The above obj ect of the present invention can be achieved by a recording medium on which the source selection program is recorded so as to be readable through a computer which is included in a source selection apparatus (1) with a pre-installed re-writable recording medium, wherein the source selection program causes the computer to function respectively as: a first source selection device (11b) which selects one source out of one or more sources belonging to a first source group; a second source selection device (11b) which selects one source out of one or more sources belonging to a second source group; a determination device (11b) which determines a kind of contents recorded on an information recording medium; and an allocation device (11b) which, based on the kind of the contents, allocates the kind of the contents to either the first source selection device (11b) or the second source selection device (11b) as the source to be thereby selectable.

The above obj ect of the present invention can be achieved by a recording medium on which the source selection program is recorded so as to be readable through a computer which is included in a source selection apparatus (1) with a pre-installed re-writable recording medium, wherein the source selection program causes the computer to function respectively as: a first source selection device (11b) which selects one source out of one or more sources belonging to a first source group; a second source selection device (11b) which selects one source out of one or more sources belonging to a second source group; a determination device (11b) which determines a kind of contents recorded on an information recording medium; and an allocation device (11b) which, based on the kind of the contents, allocates the kind of the information recording medium to either the first source selection device (11b) or the second source selection device (11b) as the source to be thereby selectable.

The above obj ect of the present invention can be achieved by a recording medium on which the source selection program is recorded so as to be readable through a computer which is included in a source selection apparatus (1) with a pre-installed re-writable recording medium, wherein the source selection program causes the computer to function respectively as: a first source selection device (11b) which selects one source out of one or more sources belonging to a first source group; a second source selection device (11b) which selects one source out of one or more sources belonging to a second source group; a determination device (11b) which determines a kind of an information recording medium; and an allocation device (11b) which, based on the kind of the information recording medium, allocates the kind of the information recording medium to either the first source selection device or the second source selection device as the source to be thereby selectable.

The above obj ect of the present invention can be achieved by a recording medium on which the source selection program is recorded so as to be readable through a computer which is included in a source selection apparatus (1) with a pre-installed re-writable recording medium, wherein the source selection program causes the computer to function respectively as: a first source selection device (11b) which selects one source out of one or more sources belonging to a first source group; a second source selection device (11b) which selects one source out of one or more sources belonging to a second source group; a determination device (11b) which determines a kind of an information recording medium; and an allocation device (11b) which, based on the kind of the information recording medium, allocates the kind of the contents recorded on the information recordingmediumto either the first source selection device (11b) or the second source selection device (11b) as the source to be thereby selectable.

### BRIEF DESCRIPTION OF THE DRAWINGS

FIG. 1 is a diagram showing an overview configuration of an information reproducing apparatus according to the embodiment (an example of an information output apparatus according to the present invention);
FIG. 2 is a diagram showing an example of appearance of an operating portion 19 and a display portion 20;
FIG. 3 is a diagram showing an example of selection and display of a source belonging to a music source group and an example of selection and display of a source belonging to a video source group displayed on the display panel 20a of the display portion 20;
FIG. 4 is a diagram showing an example of selection and display of a source belonging to the music source group and an example of selection and display of a source belonging to the video source group displayed on the display panel 20a of the display portion 20 while determining a kind of an information recording medium or a kind of its contents;
FIG. 5 is a flowchart showing a music source switching (selection) process in the control portion 11b in the case where a user operates the music source key 19c;
FIG. 6 is a flowchart showing a music source switching (selection) process in the control portion 11b in the case where a user operates the music source key 19c in the embodiment;
FIG. 7 is a flowchart showing a video source switching (selection) process in the control portion 11b in the case where a user operates the video source key 19d in the embodiment; and
FIG. 8A, 8B and 8C are diagrams showing an example of selection and display of a source belonging to the music source group and an example of selection and display of a source belonging to the video source group displayed on the display panel 20a of the display portion 20.

### DESCRIPTION OF THE PREFERRED EMBODIMENTS

Hereafter, a preferred embodiment of the present invention will be described in detail by referring to the drawings. The embodiment described below is the one in the case of applying the present invention to an information reproducing apparatus.

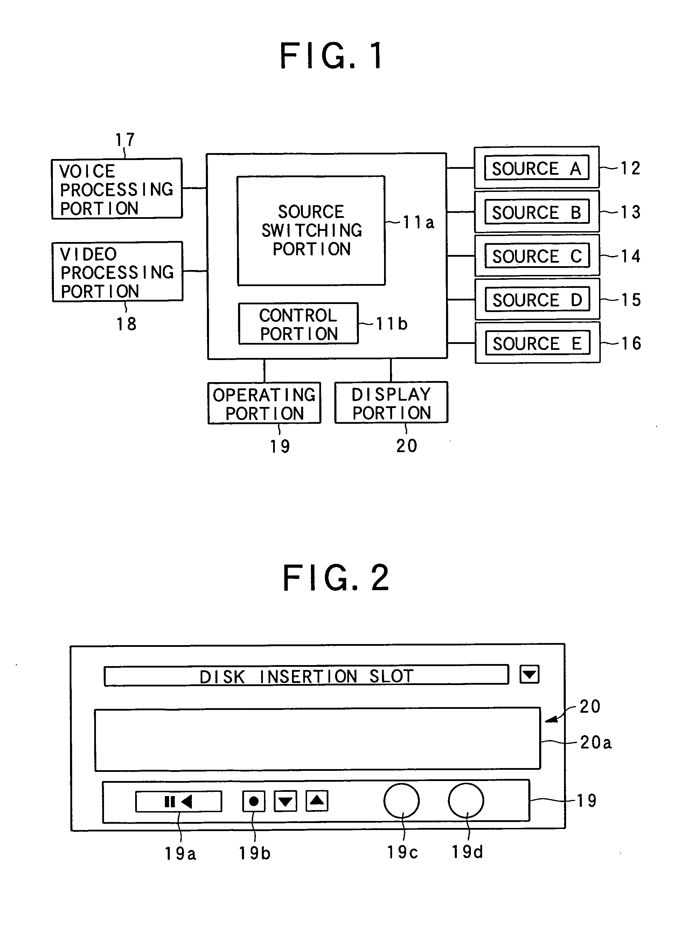

First, a configuration and functions of the information reproducing apparatus according to an embodiment of the present invention will be described by referring to FIG. 1 and so on.

FIG. 1 is a diagram showing an overview configuration example of the information reproducing apparatus (an example of an information output apparatus according to the present invention) according to the embodiment. The information reproducing apparatus may be either mounted on a vehicle or installed for domestic purposes and for business purposes.

As shown in FIG. 1, an information reproducing apparatus 1 comprises a body portion 11, a plurality of source reproduction and output portion 12 to 16 for reproducing (outputting) information (signals) from sources (A to E), a voice processing portion 17 for output-processing voice information (voice signals) outputted from the body portion 11, a video processing portion 18 for output-processing video information (video signals) outputted from the body portion 11, an operating portion 19 for receiving an instruction from a user and outputting an instruction signal thereof to the body portion 11, and a display portion 20 for displaying various kinds of information outputted from the body portion 11, where the source reproduction and output portions 12 to 16, the voice processing portion 17, the video processing portion 18, the operating portion 19 and the display portion 20 are electrically connected to the body portion 11 via a bus and so on.

Here, the sources A to E are mutually different information sources. Each of the sources (A to E) has one of the sources falling under it, such as an AM broadcast, an FM broadcast, a TV broadcast, a videotape, an MD, and also an optical disk and a card-type recording medium (Memory Stick (trademark) and so on) as an example of an information recording medium.

The optical disks can be classified into the kinds such as a CD-DA, a CD-ROM, a CD-R, a CD-RW, a Video-CD, a CD-G, a DVD-Video, a DVD-Audio, DVD-ROM, DVD-R, DVD-RW, MP3 and so on.

It is also possible, as to the AM broadcast (or the FM broadcast), to classify it into a plurality of sources (an AM 1 broadcast and an AM 2 broadcast for instance) according to its frequency band.

Furthermore, in the case where a plurality of kinds of contents are recorded on the same information recording medium (an optical disk or a card-type recording medium for instance) according to this embodiment, the respective contents recorded on the information recording medium are referred to as the sources. For instance, in the cases of a CD-ROM, a CD-R and so on of which recording form is a so-called multisession method, it is possible to record a different kind of contents for each session, such as recording music contents for a first session and video (image) contents for a second session respectively for instance. In this case, the contents recorded for the first session and the contents recorded for the second session are referred to as the sources respectively.

According to this embodiment, each of the sources described above should belong to one of source groups, that is, a music source group as an example of a first source group or a video (image) source group as a an example of second source group. For instance, an AM broadcast, an FM broadcast, an MD and a CD-DA should belong to the music source group because they apparently provide no video information. And the MP3 should belong to the music source group because it records high-quality and compressed voice information.

For instance, a TV broadcast, a videotape and a DVD-Video and so on should belong to the video source group because they apparently provide the video information. In the case where the music contents and the video contents are recorded on the same information recording medium, the music contents should belong to the music source group and the video contents should belong to the video source group.

The example in FIG. 1 shows the five sources of the sources A to E. However, the sources may be either less or more than that.

The source reproduction and output portions 12 to 16 have a function of reproducing (outputting) information from the sources A to E under the instruction of the control portion 11b mentioned later provided to the body portion 11. In the case where the source A is the AM broadcast for instance, the source reproduction and output portion 12 receives the AM broadcast as an AM tuner and outputs it to the body portion 11. In the case where the source B is the MD for instance, the source reproduction and output portion 13 reproduces the information recorded on the MD as an MD player and outputs it to the body portion 11. In the case where the source C is the TV broadcast for instance, the source reproduction and output portion 14 receives the TV broadcast as a TV tuner and outputs it to the body portion 11. In the case where the source D is the videotape for instance, the source reproduction and output portion 15 reproduces the information recorded on the videotape as a VTR (Videotape Recorder) and outputs it to the body portion 11.

In the case where the source E is the optical disk such as the CD or the DVD for instance, the source reproduction and output portion 16 reproduces the information recorded on the optical disk as a multi-disk player (hereafter, referred to as an "MLTDP") and outputs it to the body portion 11. On reproducing the information recorded on the optical disk, such an MLTDP performs a reproduction setting according to the kind of the optical disk mounted at a predetermined clamp position based on the instruction from the control portion 11b and reads the information included in the contents recorded on the optical disk by means of a reproducing mechanism (comprised of an optical pickup, a spindle motor, a servo circuit, a signal processing portion and so on) so as to reproduce it.

As the AM tuner, the MD player, the TV tuner, the VTR and the MLTDP are well-known in public, a further detailed description thereof will be omitted. The source reproduction and output portions 12 to 16 may be either integrally provided in a housing of the body portion 11 or separately provided outside the housing respectively.

As shown in FIG. 1, the body portion 11 comprises a source switching portion 11a, the control portion 11b and so on.

The source switching portion 11a switches the information outputted from the source reproduction and output portions 12 to 16 (switches the source) under the instruction of the control portion 11b to output it to the voice processing portion 17 and the video processing portion 18. And the voice processing portion 17 comprises an amplifier, a speaker and so on so as to amplify the source voice information (voice signals) switched and outputted by the source switching portion 11a of the body portion 11 with the amplifier and output it as a sound wave from the speaker. The video processing portion 18 comprises a video processing circuit, a monitor and so on to perform a drawing process to the video information (video signals) switched and outputted by the source switching portion 11a of the body portion 11 with the video processing circuit and display a video (image) on the monitor.

As a computer, the control portion 11b comprises a CPU (Central Processing Unit) having a computing function, an RAM for work, a nonvolatile memory, an ROM for storing various processing programs and data and so on. And it exerts integrated control over the entire information reproducing apparatus 1 according to the instruction signal from the operating portion 19 and functions as an example of a source selection apparatus (comprising a first source selection device, a second source selection device, a determination device and an allocation device) and a control apparatus of the present invention by executing various processing programs stored in the ROM for instance (including a source selection program of the present invention: the source selection program may be, for instance, either downloaded from a server on the Internet or recorded on the recording medium such as a CD-ROM to be provided).

To be more precise, as an example of the first source selection device of the present invention, the control portion 11b selects one source out of one or more sources belonging to the music source group based on the instruction signal (source switching (selection) instruction) by a user operation of a source switching (selection) key for the music source group of the operating portion 19 (hereafter, referred to as a "music source key").

As an example of the second source selection device of the present invention, the control portion 11b selects one source out of one or more sources belonging to the video source group based on the instruction signal (source switching (selection) instruction) by the user operation of the source switching (selection) key for the video (image) source group of the operating portion 19 (hereafter, referred to as a "video source key").

FIG. 2 is a diagram showing an example of appearance of the operating portion 19 and the display portion 20. As shown in FIG. 2, the operating portion 19 has a reproduction instruction button 19a for reproducing (outputting) information from the source reproduction and output portions 12 to 16, a stop instruction button 19b for stopping the reproduction, a music source key 19c and a video source key 19d provided thereon. According to the user's operation of the buttons, the instruction signal in response to the operation is outputted to the control portion 11b of the body portion 11.

According to this embodiment, the music source key 19c and the video source key 19d are dial keys such as rotary keys. It is possible, if the user turns such a key, to sequentially switch and select the sources set up in predetermined order. The appearance of the sources sequentially switched and selected is displayed on a display panel (a liquid crystal panel for instance) 20a provided on the display portion 20. Such keys do not have to be the dial keys such as the rotary keys but may be push-button keys (every time the user pushes such a key, the sources set up in predetermined order are sequentially switched and selected).

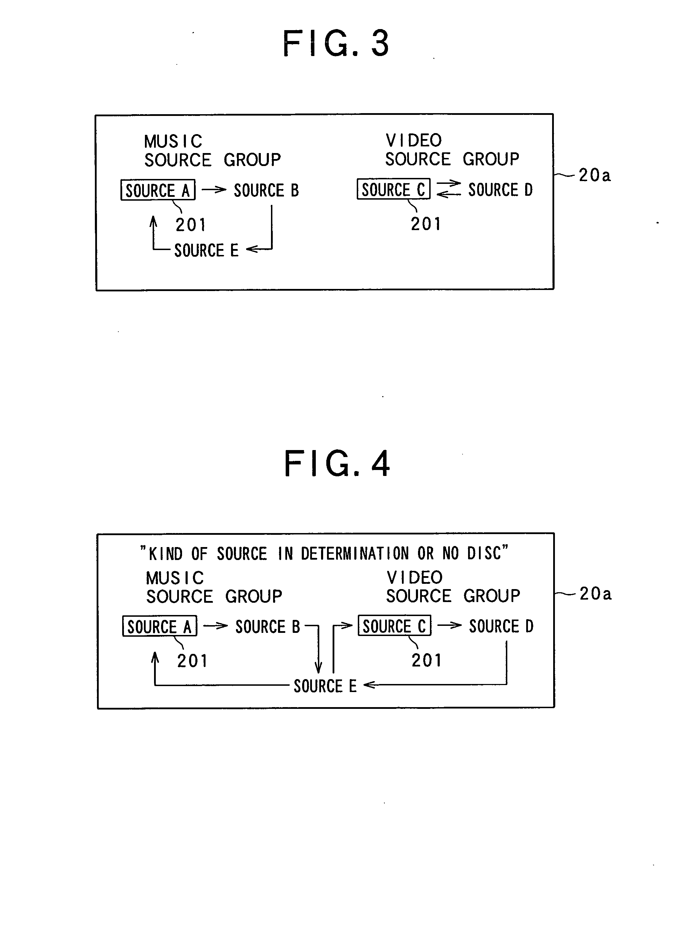

FIG. 3 is a diagram showing an example of selection and display of the source belonging to the music source group and an example of selection and display of the source belonging to the video source group displayed on the display panel 20a of the display portion 20. In the example in FIG. 3, the source belonging to the music source group and the source belonging to the video source group are mutually independent, and the sources indicated by a cursor 201 (a "source A" in the music source group and a "source C" in the video source group) are selected respectively. And for instance, the user operates the music source key 19c or the video source key 19d so as to move the cursor 201 sequentially in directions of arrows and switch the selection of the source.

After the source is thus selected, as an example of the control apparatus of the present invention, the control portion 11b provides the instructions to the source reproduction and output portions 12 to 16 and the source switching portion 11a so as to exert control to reproduce (output) the information from the selected source. In the example in FIG. 3, the sources are selected in both the music source group and the video source group. As for which source the information is reproduced (outputted) from, however, priority is given to the source lastly selected, for instance. The instruction to reproduce (output) the information from the selected source is provided, for instance, by the control portion 11b on having the source switched or selected by the music source key 19c or the video source key 19d or on having the reproduction instruction button 19a pushed by the user.

Here, as described above, in the case where the source reproduction and output portion 16 is the MLTDP for instance, various optical disks of different kinds may be loaded here as a source, such as a CD-DA, a DVD-Video and an MP3. Therefore, it is up to the kind of loaded optical disk whether the source provided by the source reproduction and output portion 16 belongs to the music source group or the video source group. This also applies to the case where the source is a card-type recording medium, for instance.

Furthermore, in the case where a plurality of contents are recorded on the same information recording medium, it depends on the contents as to whether the source provided by the source reproduction and output portion 16 belongs to the music source group or the video source group.

For such cases, as an example of the determination device of the present invention, the control portion 11b determines the kind of the information recording medium or the kind of the contents recorded on the information recording medium. And as an example of the allocation device of the present invention, the control portion 11b allocates the information recording medium or the contents as the source by operating either the music source key 19c or the video source key 19d based on the determined kind of information recording medium or kind of contents so as to be selectable by the control portion 11b. There may be the cases where it is difficult to determine the kind of the contents recorded on the information recording medium. In such cases, it is possible to regard the determination of the kind of the information recording medium as the determination of the kind of the contents (in the case where the kind of the information recording medium is the DVD, the kind of the contents is regarded as video contents).

The following is an example of a method of the control portion 11b for determining the kind of the information recording medium or the kind of the contents recorded on the information recording medium.

For instance, the control portion 11b controls the MLTDP to determine the kind of an optical disk as a CD (a CD-DA for instance) in the case where a number of binarization signals of a tracking error signal is equal to a threshold or more and to determine it as a DVD (a DVD-Video for instance) in the case where it is less than the threshold.

The control portion 11b controls the MLTDP to rotate the optical disk at a prescribed revolution, and measures a maximum pit length and a minimum pit length of the optical disk at the time to distinguish a CD from a DVD by a size of the pit lengths.

The control portion 11b controls the MLTDP to obtain a TOC (Table of Contents) information recorded in a lead-in area of the CD so as to determine the kind of the CD. And the control portion 11b also controls the MLTDP to obtain a video manager recorded on the DVD so as to determine the kind of the DVD.

Furthermore, in the case where an MP3 file exists in the contents recorded on the optical disk or the card-type recording medium as a result of searching whether or not it exists, the control portion 11b determines the MP3. In this case, it determines that the contents are music contents.

Furthermore, in the case where the contents are recorded on the information recording medium by compressing them by a Dolby Digital (registered trademark) (AC-3) method, an average volume level (value of averaged volume levels of the entire contents) is normally recorded. The control portion 11b obtains it, and determines that the contents are the music contents if the average volume level is equal to a threshold or more and determines that the contents are the video contents if it is less than the threshold.

Furthermore, in the case where the contents are recorded on the recording medium in an uncompressed state, that is, by a linear PCM method of high sound quality for instance, it determines that the contents are the music contents.

In addition, there is a well^known or non-well-known method of determining (determining the kind of the information recording medium or the kind of the contents). However, the method of determination of the control portion 11b is not especially limited, and so any other method of determination is applicable.

This embodiment showed the examples of having the kind of an information recording medium or the kind of its contents determined by the control portion 11b. However, it is also possible to have the kind of an information recording medium or the kind of its contents determined by the MLTDP and have a determination result thereof obtained by the control portion 11b so as to consider it as the control portion 11b determining the kind of the information recording medium or the kind of the contents.

It is also possible to constitute it so that the control portion 11b determines the kind of the information recording medium and then further determines the kind of the contents based on the determination result.

In the case where the information recording medium is determined to be a CD (a CD-DA for instance) as a result of the determination for instance, the control portion 11b allocates the CD as the source belonging to the music source group to be selectable by the control portion 11b by operating the music source key 19c.

In the case where the information recording medium is determined to be a DVD (a DVD-Video for instance) for instance, the control portion 11b allocates the DVD as the source belonging to the video source group to be selectable by the control portion 11b by operating the video source key 19d.

In the case where the information recording medium is determined to be an MP3 for instance, the control portion 11b allocates the MP3 as the source belonging to the music source group to be selectable by the control portion 11b by operating the music source key 19c.

Furthermore, in the case where the contents recorded on the information recording medium are determined to be the music contents for instance, the control portion 11b allocates the contents as the source belonging to the music source group to be selectable by the control portion 11b by operating the music source key 19c.

Furthermore, in the case where the contents recorded on the information recording medium are determined to be the video contents for instance, the control portion 11b allocates the contents as the source belonging to the video source group to be selectable by the control portion 11b by operating the video source key 19d.

In the case where it is determined that the music contents and the video contents are recorded on the same information recording medium, the control portion 11b allocates the music contents thereof as the source belonging to the music source group to be selectable by the control portion 11b by operating the music source key 19c, and also allocates the video contents as the source belonging to the video source group to be selectable by the control portion 11b by operating the video source key 19d.

As described above, the kind of the information recording medium or the kind of the contents is determined, and the information recording medium or the contents are automatically allocated according to the kind thereof by the allocation method as the source belonging to one of the source groups to be selectable by the control portion 11b by operating either the music source key 19c or the video source key 19d. Therefore, the user can promptly select any desired music information recording medium or any desired contents while driving a vehicle for instance.

It may take a very long time to determine the kind of an information recording medium or the kind of its contents (if it cannot be determined at one time, it may take over one minute because of a retry). Inparticular, the kinds of optical disks are increasing and the number to be determined is increasing in recent years so that it is conspicuously becoming more time-consuming. Therefore, there arises a problem that, while determining the kind of the information recording medium or the kind of the contents, the information recording medium or the contents cannot be allocated to any source group and so the user cannot select the information recording medium or the contents.

Thus, according to this embodiment, the control portion 11b allocates the information recording medium or the contents to be selectable by both the music source key 19c or the video source key 19d until the kind of the information recording medium or the kind of the contents is determined. To be more specific, when starting the determination of the kind of the information recording medium or the kind of the contents, the control portion 11b allocates the information recording medium or the contents as the source to be selectable by both the music source key 19c and the video source key 19d. And when finishing the determination, it allocates the information recording medium or the contents to be selectable by operating either the music source key 19c or the video source key 19d based on the determined kind of the information recording medium or the contents.

FIG. 4 is a diagram showing an example of selection and display of the source belonging to the music source group and an example of selection and display of the source belonging to the video source group displayed on the display panel 20a of the display portion 20 while determining the kind of the information recording medium or the kind of the contents. As shown in FIG. 4, while determining the kind of the information recording medium or the kind of the contents as the source E, the user can select the source E with both the music source key 19c and the video source key 19d.

And in the case where the source E is determined to be the kind belonging to the music source group for instance, the source E is allocated to be selectable by the control portion 11b by operating the music source key 19c as shown in FIG. 3 for instance. And the user can select the source E only with the music source key 19c.

Thus, even in the case where it takes a long time to determine the kind of the information recording medium or the kind of the contents, the user can promptly select the desired information recording medium or the desired contents.

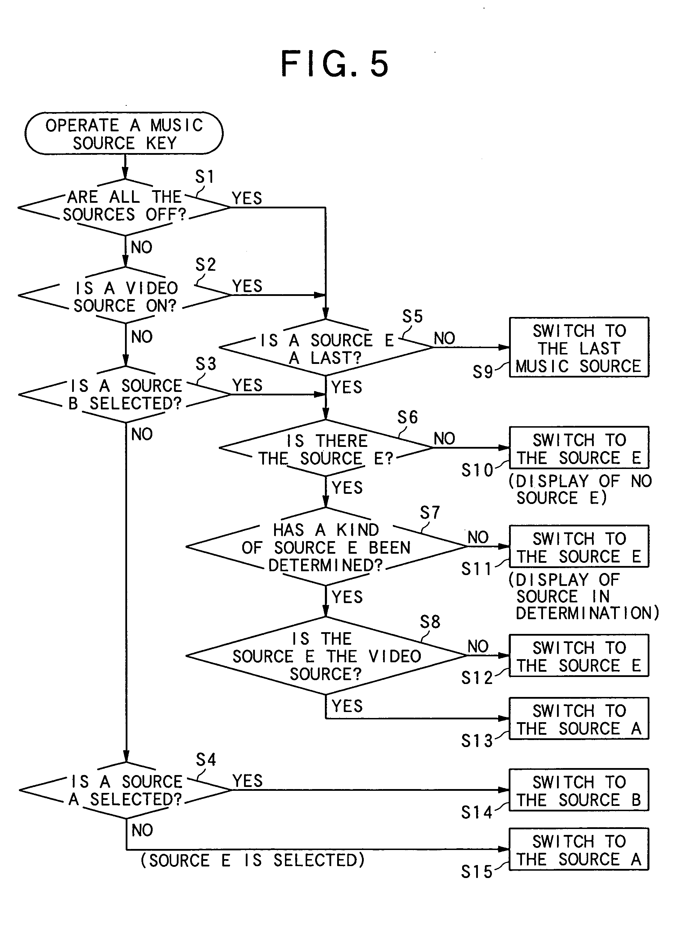

Next, a description will be given by referring to FIG. 5 and so on as to a source switching (selection) process in the control portion 11b of the information reproducing apparatus 1.

FIG. 5 is a flowchart showing a music source switching (selection) process in the control portion 11b in the case where the user operates the music source key 19c. In this process, the sources A and B belong to the music source group, the sources C and D belong to the video source group, and the source E belongs to the music source group or the video source group. And switching order of the music source groups is preset as the order of the sources A, B and E (limited to when determining the kind of source or belonging to the music source group).

In the process in FIG. 5, if the music source key 19c of the operating portion 19 is operated (turned to switch the sources once) by the user, the control portion 11b first determines whether or not all the sources are off (that is, all the sources are in an unselected state) (step S1). In the case where all the sources are off (step S1: YES), it moves on to a step S5.

In the case where all the sources are not off (step S1: NO), the control portion 11b determines whether or not the video source is on (in a state in which the video source is selected) (step S2). In the case where the video source is on (step S2: YES), it moves on to a step S5.

In the case where the video source is not on (step S2: NO), the control portion 11b determines whether or not the source B is selected (step S3). In the case where the source B is selected (step S3: YES), it moves on to a step S6.

In the case where the source B is not selected (step S3: NO), the control portion 11b determines whether or not the source A is selected (step S4). In the case where the source A is selected (step S4: YES), the control portion 11b switches from the source A to the source B (step S14). In the case where the source A is not selected (step S4: NO), that is, in the case where the source E is selected, the control portion 11b switches from the source E to the source A (step S15).

In the step S5, the control portion 11b determines whether or not the source E is the last. To be more specific, no music source is selected in this case, and so the control portion 11b determines whether or not the source E is the source lastly selected by the user (stored in the nonvolatile memory for instance). In the case where it is not the source E (step S5: NO), it is switched to the last music source (the source A or the source B in this case) (step S9). In the case where it is the source E (step S5: YES), it moves on to a step S6.

In the step S6, the control portion 11b determines whether or not the source E exists. To be more specific, the control portion 11b determines whether or not the information recording medium is loaded (placed) in the source reproduction and output portion 16. In the case where there is no source E (step S6: NO), it switches to the source E (step S10). In this case, "No source E" is displayed on the display panel 20a of the display portion 20.

In the case where there is the source E (step S6: YES), the control portion 11b determines whether or not the kind of the source E has been determined (step S7). In the case where the kind of the source E has not been determined (step S7: NO), that is, in the case where it is currently being determined for instance, it is allocated, as described above, to be selectable by both the music source key 19c and the video source key 19d. Therefore, the control portion 11b can select the source E as shown in FIG. 4 so that it switches to the source E (step S11). In this case, "Source E in determination" is displayed on the display panel 20a of the display portion 20.

In the case where the kind of the source E has been determined (step S7: YES), that is, in the case where the allocation of the source E is completed, the control portion 11b determines whether or not the source E is the video source (whether or not it belongs to the video source group) (step S8). In the case where the source E is not the video source (step S8: NO), the control portion 11b switches from the source B to the source E as shown in FIG. 3 for instance (step S12). In the case where the source E is the video source (step S8: YES), the control portion 11b switches to the source A (step S12).

A flow of a video source switching (selection) process in the control portion 11b in the case where the user operates the video source key 19d is the same as the flow of the music source switching (selection) process. Therefore, a description thereof will be omitted.

### (EXAMPLES)

Next, a description will be given as to the music source switching (selection) process and the video source switching (selection) process in the case of applying actual sources as the embodiment.

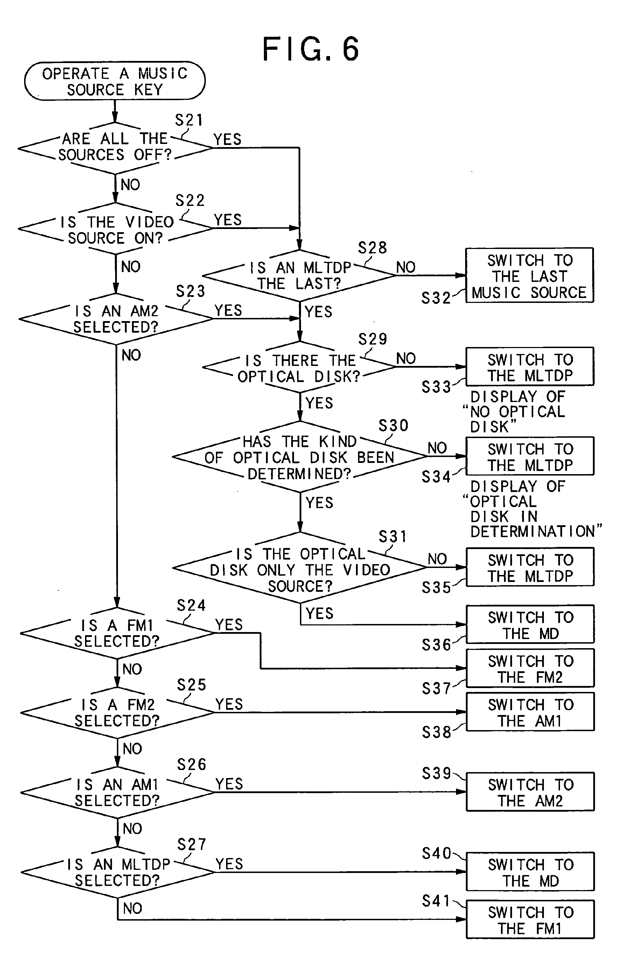

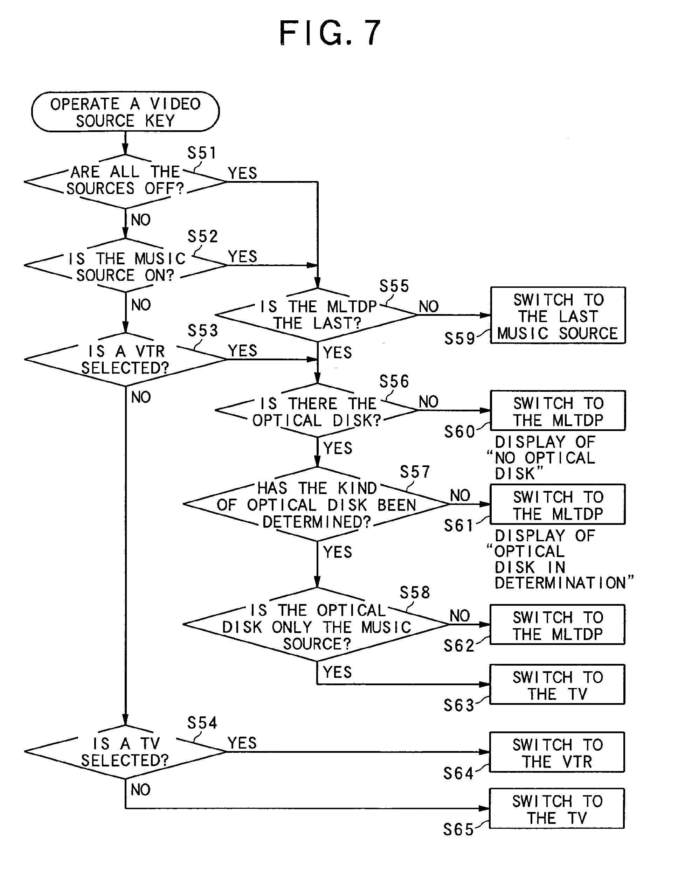

FIG. 6 is a flowchart showing the music source switching (selection) process in the control portion 11b in the case where the user operates the music source key 19c in the embodiment. FIG. 7 is a flowchart showing the video source switching (selection) process in the control portion 11b in the case where the user operates the video source key 19d in the embodiment.

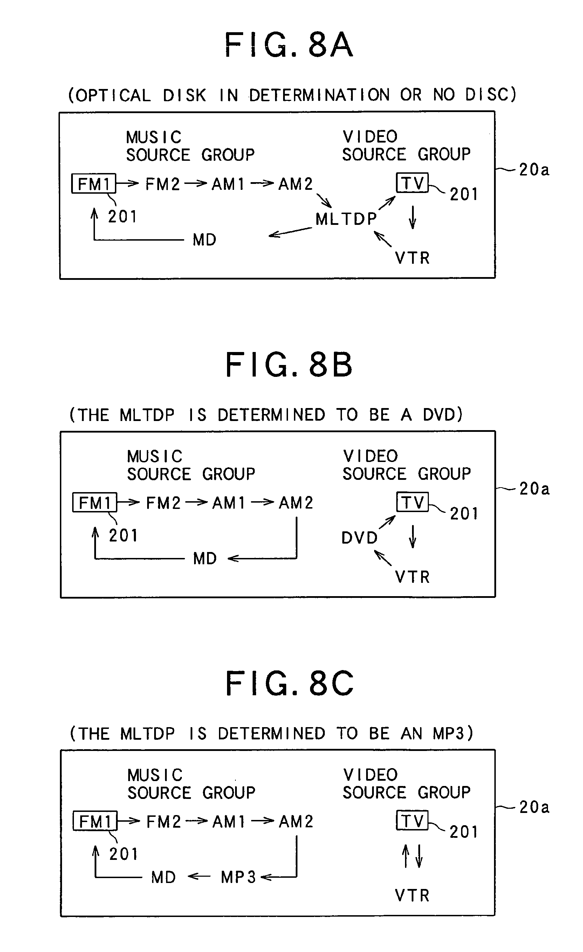

FIG. 8 is a diagram showing an example of the selection and display of the source belonging to the music source group and an example of the selection and display of the source belonging to the video source group displayed on the display panel 20a of the display portion 20. FIG. 8A shows a state of determining the kind of an optical disk on the MLTDP, FIG. 8B shows the case where the kind of the optical disk on the MLTDP is determined to be a DVD, and FIG. 8C shows the case where the kind of the optical disk on the MLTDP is determined to be an MP3 respectively.

The processes shown in FIGs. 6 and 7 exemplify five sources of an "MD", an "FM 1 broadcast (hereafter "FM 1")", an "FM 2 broadcast (hereafter "FM 2")", an "AM 1 broadcast (hereafter "AM 1")" and an "AM 2 broadcast (hereafter "AM 2")" as the sources belonging to the music source group, and also exemplify two sources of a "TV broadcast (hereafter "TV")" and a "videotape (hereafter "VTR")" as the sources belonging to the video source group. In addition, FIGs. 6 and 7 exemplify the "MLTDP" for reproducing the information from the optical disk belonging to either the music source group or the video source group. The switching order of the music source groups is preset as the order of the MD, the FM 1, the FM 2, the AM 1, the AM 2 and the MLTDP (limited to when determining the kind of the source or belonging to the music source group). The switching order of the video source groups is preset as the order of the TV, the VTR and the MLTDP (limited to when determining the kind of the source or belonging to the video source group).

In the process in FIG. 6, if the music source key 19c of the operating portion 19 is operated (turned to switch the sources once) by the user, the control portion 11b first determines whether or not all the sources are off (that is, all the sources are in an unselected state) (step S21). In the case where all the sources are off (step S21: YES), it moves on to a step S28.

In the case where all the sources are not off (step S21: NO), the control portion 11b determines whether or not the video source is on (in a state in which the video source is selected) (step S22). In the case where the video source is on (step S22: YES), it moves on to the step S28.

In the case where the video source is not on (step S22: NO), the control portion 11b determines whether or not the AM2 is selected (step S23). In the case where the AM2 is selected (step S23: YES), it moves on to a step S29.

In the case where the AM2 is not selected (step S23: NO), the control portion 11b determines whether or not the FM1 is selected (step S24). In the case where the FM1 is selected (step S24: YES), the control portion 11b switches from the FM1 to the FM2 (step S37).

In the case where the FM1 is not selected (step S24: NO), the control portion 11b determines whether or not the FM2 is selected (step S25). In the case where the FM2 is selected (step S25: YES), the control portion 11b switches from the FM2 to the AM1 (step S38).

In the case where the FM2 is not selected (step S25: NO), the control portion 11b determines whether or not the AM1 is selected (step S26). In the case where the AM1 is selected (step S26: YES), the control portion 11b switches from the AM1 to the AM2 (step S39).

In the case where the AM1 is not selected (step S26: NO), the control portion 11b determines whether or not the MLTDP is selected (that is, the state in which the MLTDP is selected) (step S27). In the case where the MLTDP is selected (step S27: YES), the control portion 11b switches from the MLTDP to the MD (step S40).

In the case where the MLTDP is not selected (step S27 NO), that is, in the case where the MD is selected, the control portion 11b switches from the MD to the FM1 (step S41).

In the step S28, the control portion 11b determines whether or not the MLTDP is the last. To be more specific, the music source is not selected in this case, and so the control portion 11b determines whether or not the source lastly selected by the user is an optical disk on the MLTDP (the lastly selected medium is recorded in the nonvolatile memory for instance). In the case where it is not the optical disk (step S28: NO), it switches to the last music source (step S32). In the case where it is the optical disk (step S28: YES), it moves on to a step S29.

In the step S29, the control portion 11b determines whether or not the optical disk is loaded on the MLTDP. If there is no optical disk (step S29: NO), it switches to the MLTDP (step S33). In this case, "No optical disk" is displayed on the display panel 20a of the display portion 20.

In the case where there is the optical disk (step S29: YES), the control portion 11b determines whether or not the kind of the optical disk has been determined (step S30). In the case where the kind of the optical disk has not been determined (step S30: NO), that is, in the case where it is currently being determined for instance, it is allocated, as described above, to be selectable by both the music source key 19c and the video source key 19d. Therefore, the control portion 11b can select the MLTDP as shown in FIG. 8A so that it switches to the MLTDP (step S34). In this case, "Optical disk in determination" is displayed on the display panel 20a of the display portion 20.

In the case where the kind of the optical disk has been determined (step S30: YES), that is, in the case where the allocation of the optical disk is completed, the control portion 11b determines whether or not the optical disk is the video source (whether or not it belongs to the video source group) (step S31). In the case where the optical disk is not only the video source (step S31: NO), that is, in the case of the MP3 for instance, the control portion 11b switches to the MLTDP (MP3) as shown in FIG. 8C (step S35). In the case where the optical disk is only the video source (step S31: YES), the control portion 11b switches to the MD (step S36).

Next, in the process in FIG. 7, if the video source key 19d of the operating portion 19 is operated by the user, the control portion 11b first determines whether or not all the sources are off (step S51) as in step S21 shown in FIG. 6. In the case where all the sources are off (step S51: YES), it moves on to a step S55.

In the case where all the sources are not off (step S51: NO), the control portion 11b determines whether or not the music source is on (in a state in which the music source is selected) (step S52). In the case where the music source is on (step S52: YES), it moves on to a step S55.

In the case where the music source is not on (step S52: NO), the control portion 11b determines whether or not the VTR is selected (step S53). In the case where the VTR is selected (step S53: YES), it moves on to a step S56.

In the case where the VTR is not selected (step S53: NO), the control portion 11b determines whether or not the TV is selected (step S54). In the case where the TV is selected (step S54: YES), the control portion 11b switches from the TV to the VTR (step S64).

In the case where the TV is not selected (step S54: NO), that is, in the case where the MLTDP is selected, the control portion 11b switches to the TV (step S65).

In the step S55, the control portion 11b determines whether or not the MLTDP is the last. To be more specific, the video source is not selected in this case, and so the control portion 11b determines whether or not the source lastly selected by the user is the optical disk on the MLTDP (the lastly selected source is recorded in the nonvolatile memory for instance). In the case where it is not the optical disk (step S55: NO), it switches to the last video source (step S59). In the case where it is the optical disk (step S55: YES), it moves on to a step S56.

In the step S56, the control portion 11b determines whether or not the optical disk is loaded on the MLTDP. If there is no optical disk (step S56: NO), it switches to the MLTDP (step S60). In this case, "No optical disk" is displayed on the display panel 20a of the display portion 20.

In the case where there is the optical disk (step S56: YES) , the control portion 11b determines whether or not the kind of the optical disk has been determined (step S57). In the case where the kind of the optical disk has not been determined (step S57: NO), that is, in the case where it is currently being determined for instance, it is allocated, as described above, to be selectable by both the music source key 19c and the video source key 19d. Therefore, the control portion 11b can select the MLTDP as shown in FIG. 8A so that it switches to the MLTDP (step S61). In this case, "Optical disk in determination" is displayed on the display panel 20a of the display portion 20.

In the case where the kind of the optical disk has been determined (step S57: YES), that is, in the case where the allocation of the optical disk is completed, the control portion 11b determines whether or not the optical disk is the music source (whether or not it belongs to the music source group) (step S58). In the case where the optical disk is not only the music source (step S58: NO), that is, in the case of the DVD for instance, the control portion 11b switches to the MLTDP (DVD) as shown in FIG. 8B (step S62). In the case where the optical disk is only the music source (step S58: YES), the control portion 11b switches to the TV (step S63).

As shown in FIG. 8A for instance, the MLTDP (optical disk) is selectable by both the music source key and the video source key while determining the optical disk on the MLTDP. At this time, it is also possible to determine the kind of the card-type recording medium or the kind of the contents recorded on the card-type recording medium in parallel. In this case, both the MLTDP and the card-type recording medium are processed by the control portion 11b so as to be selectable by both the music source key and the video source key.

As described above, according to the embodiment, the selectable sources are classified into the music source group and the video source group, and the keys for selecting the sources (the music source key and the video source key) are provided to them respectively. And even in the case of the source such as the optical disk unclear about whether belonging to the music source group or the video source group until being loaded, the kind thereof is automatically determined and it is allocated to be selectable by either the music source key or the video source key. Therefore, it is possible for the user to promptly select the desired source even when the selectable sources increased.

In the case where the information reproducing apparatus 1 is mounted on the vehicle for instance, it is possible to select a desired music source to hear music by operating the music source key without operating the video source key even when it is difficult (or prohibited by an automatic prohibition function) to see the video source while a user is driving. It is thereby possible to improve convenience for the user.

In the case where an area of an operation panel is small, it is thinkable that, as with this embodiment, the key for sequentially switching and selecting the sources with one key should be applied instead of providing the selection key to each source. In this case, it is effective to have the configuration as with the embodiment.

Furthermore, the information recording medium or the contents are selectable by both the music source key or the video source key to be determined while determining the kind of the information recordingmediumor the kind of the contents. Therefore, the user can promptly select the desired information recording medium or the desired contents as the source even in the case where the determination takes time.

The embodiment was described by applying the music source group as an example of the first source group and the video source group as an example of the second source group respectively. However, it is not limited to dividing them into the music and the video, but they may also be divided into other kinds such as a high-quality sound source group and a low-quality sound source group.

According to the embodiment, the sources are divided into the two source groups of the music source group and the video source group. However, it is not limited thereto but may also be divided into three or more source groups. Even if divided into three or more source groups (dynamic images, static images and music for instance), the two source groups of the first source group and the second source group are provided without fail, and so they are included in the scope of the present invention. For instance, in the case where they are divided into three or more source groups, source selection keys corresponding to the respective source groups are provided. And the process of the control portion in the case where each source selection key is operated is the same as the process in FIG. 5 and so on. In this case, the control portion determines the kind of the information recordingmedium or the kind of the contents. Based on the kind thereof, the control portion allocates the information recording medium or the contents to one of the first source selection device, the second source selection device and a third source selection device (which selects one source out of one or more sources belonging to a third source group) as the source to be thereby selectable. And in this case, the control portion (allocation device) allocates the information recording medium or the contents as the source to be selectable by all the first source selection device, the second source selection device and the third source selection device until the kind of the information recording medium or the kind of the contents is determined.

The invention may be embodied in other specific forms without departing fromthe spirit or essential characteristics thereof. The present embodiments are therefore to be considered in all respects as illustrative andnot restrictive, the scope of the invention being indicated by the appended claims rather than by the foregoing description and all changes which come within the meaning and range of equivalency of the claims are therefore intended to be embraced therein.

## Claims

1. A source selection apparatus (1) **characterized by**:
a first source selection device (11b) which selects one source out of one or more sources belonging to a first source group;
a second source selection device (11b) which selects one source out of one or more sources belonging to a second source group;
a determination device (11b) which determines a kind of contents recorded on an information recording medium; and
an allocation device (11b) which, based on the kind of the contents, allocates the kind of the contents to either the first source selection device (11b) or the second source selection device (11b) as the source to be thereby selectable.

2. The source selection apparatus (1) according to claim 1, wherein:
the information recording medium has at least two kinds of contents recorded thereon; and
based on the kinds of contents, the allocation device (11b) allocates one kind of the contents to the first source selection device (11b) to be thereby selectable as the source belonging to the first source group and allocates the other kind of the contents to the second source selection device (11b) to be thereby selectable as the source belonging to the second source group.

3. A source selection apparatus (1) **characterized by**:
a first source selection device (11b) which selects one source out of one or more sources belonging to a first source group;
a second source selection device (11b) which selects one source out of one or more sources belonging to a second source group;
a determination device (11b) which determines a kind of contents recorded on an information recording medium; and
an allocation device (11b) which, based on the kind of the contents, allocates the kind of the information recording medium to either the first source selection device (11b) or the second source selection device (11b) as the source to be thereby selectable.

4. A source selection apparatus (1) **characterized by**:
a first source selection device (11b) which selects one source out of one or more sources belonging to a first source group;
a second source selection device (11b) which selects one source out of one or more sources belonging to a second source group;
a determination device (11b) which determines a kind of an information recording medium; and
an allocation device (11b) which, based on the kind of the information recording medium, allocates the kind of the information recording medium to either the first source selection device (11b) or the second source selection device (11b) as the source to be thereby selectable.

5. A source selection apparatus (1) **characterized by**:
a first source selection device (11b) which selects one source out of one or more sources belonging to a first source group;
a second source selection device (11b) which selects one source out of one or more sources belonging to a second source group;
a determination device (11b) which determines a kind of an information recording medium; and
an allocation device (11b) which, based on the kind of the information recording medium, allocates the kind of the contents recorded on the information recording medium to either the first source selection device (11b) or the second source selection device (11b) as the source to be thereby selectable.

6. The source selection apparatus (1) according to any one of claims 1 to 5, wherein the allocation device (11b) allocates the kind of the contents or the kind of the information recording medium to both the first source selection device (11b) and the second source selection device (11b) as the source to be thereby selectable until the kind of the contents or the kind of the information recording medium is determined by the determination device (11b).

7. The source selection apparatus (1) according to any one of claims 1 to 5, wherein the sources belonging to the first source group are music sources and the sources belonging to the second source group are video sources.

8. An information output apparatus (1) **characterized by** the source selection apparatus (1) according to any one of claims 1 to 5 and a control apparatus which exerts control to have information outputted from a source selected by the source selection apparatus (1).

9. A source allocation method of a source selection apparatus (1) comprising a first source selection device (11b) which selects one source out of one or more sources belonging to a first source group and a second source selection device (11b) which selects one source out of one or more sources belonging to a second source group, the source allocation method **characterized by**:
a process which determines a kind of contents recorded on an information recording medium; and
a process which, based on the kind of the contents, allocates the kind of the contents to either the first source selection device (11b) or the second source selection device (11b) as the source to be thereby selectable.

10. A source allocation method of a source selection apparatus (1) comprising a first source selection device (11b) which selects one source out of one or more sources belonging to a first source group and a second source selection device (11b) which selects one source out of one or more sources belonging to a second source group, the source allocation method **characterized by**:
a process which determines a kind of contents recorded on an information recording medium; and
a process which, based on the kind of the contents, allocates the kind of the information recording medium to either the first source selection device (11b) or the second source selection device (11b) as the source to be thereby selectable.

11. A source allocation method of a source selection apparatus (1) comprising a first source selection device (11b) which selects one source out of one or more sources belonging to a first source group and a second source selection device (11b) which selects one source out of one or more sources belonging to a second source group, the source allocation method **characterized by**:
a process which determines a kind of an information recording medium; and
a process which, based on the kind of the information recording medium, allocates the kind of the information recording medium to either the first source selection device (11b) or the second source selection device (11b) as the source to be thereby selectable.

12. A source allocation method of a source selection apparatus (1) comprising a first source selection device (11b) which selects one source out of one or more sources belonging to a first source group and a second source selection device (11b) which selects one source out of one or more sources belonging to a second source group, the source allocation method **characterized by**:
a process which determines a kind of an information recording medium; and
a process which, based on the kind of the information recording medium, allocates the kind of the contents recorded on the information recording medium to either the first source selection device (11b) or the second source selection device (11b) as the source to be thereby selectable.

13. A recording medium on which the source selection program is recorded so as to be readable through a computer which is included in a source selection apparatus (1) with a pre-installed re-writable recording medium, wherein the source selection program causes the computer to function respectively as:
a first source selection device (11b) which selects one source out of one or more sources belonging to a first source group;
a second source selection device (11b) which selects one source out of one or more sources belonging to a second source group;
a determination device (11b) which determines a kind of contents recorded on an information recording medium; and
an allocation device (11b) which, based on the kind of the contents, allocates the kind of the contents to either the first source selection device (11b) or the second source selection device (11b) as the source to be thereby selectable.

14. A recording medium on which the source selection program is recorded so as to be readable through a computer which is included in a source selection apparatus (1) with a pre-installed re-writable recording medium, wherein the source selection program causes the computer to function respectively as:
a first source selection device (11b) which selects one source out of one or more sources belonging to a first source group;
a second source selection device (11b) which selects one source out of one or more sources belonging to a second source group;
a determination device (11b) which determines a kind of contents recorded on an information recording medium; and
an allocation device (11b) which, based on the kind of the contents, allocates the kind of the information recording medium to either the first source selection device (11b) or the second source selection device (11b) as the source to be thereby selectable.

15. A recording medium on which the source selection program is recorded so as to be readable through a computer which is included in a source selection apparatus (1) with a pre-installed re-writable recording medium, wherein the source selection program causes the computer to function respectively as:
a first source selection device (11b) which selects one source out of one or more sources belonging to a first source group;
a second source selection device (11b) which selects one source out of one or more sources belonging to a second source group;
a determination device (11b) which determines a kind of an information recording medium; and
an allocation device (11b) which, based on the kind of the information recording medium, allocates the kind of the information recording medium to either the first source selection device or the second source selection device as the source to be thereby selectable.

16. A recording medium on which the source selection program is recorded so as to be readable through a computer which is included in a source selection apparatus (1) with a pre-installed re-writable recording medium, wherein the source selection program causes the computer to function respectively as:
a first source selection device (11b) which selects one source out of one or more sources belonging to a first source group;
a second source selection device (11b) which selects one source out of one or more sources belonging to a second source group;
a determination device (11b) which determines a kind of an information recording medium; and
an allocation device (11b) which, based on the kind of the information recording medium, allocates the kind of the contents recorded on the information recording medium to either the first source selection device (11b) or the second source selection device (11b) as the source to be thereby selectable.
